# EUROPÄISCHE PATENTANMELDUNG

(11) **EP 1 358 798 A1**
(43) Veröffentlichungstag der Anmeldung: **05.11.2003**
(21) Anmeldenummer: 03009187.0
(22) Anmeldetag: 22.04.2003
(51) Int. Cl.: A01N 25/04, A01N 47/18, A01N 43/80, A01N 41/04, A01N 33/04

(54) **Verfahren zur Behandlung von mit Algen und/oder Pilzen befallenen Flächen**

(30) Priorität: 25.04.2002 DE 10218482
(71) Anmelder: STO AG, D-79780 Stühlingen (DE)
(72) Erfinder: Güntert, Manfred, 78790 Stühlingen (DE); Grochal, Peter, Dr., 79761 Waldshut (DE); Egle, Gabriele, 78176 Blumberg-Fützen (DE); Duttlinger, Werner, Dr., 79848 Bonndorf (DE)
(74) Vertreter: Patentanwälte Leinweber & Zimmermann

(57) **Zusammenfassung**

Die Erfindung betrifft ein Verfahren zur Behandlung von mit Algen und/oder Pilzen befallenen Flächen, bei dem nach einer vorhergehenden Reinigung z.B. mit einem Hochdruckreiniger in einem vorzugsweise einmaligen Auftrag eine pastöse, hydrophobierende Creme aufgetragen wird, die 2,5 bis 12 Gew.-% einer gegen Algen und/oder Pilze hochwirksamen Kombination enthält.

## Beschreibung

Aufgrund veränderter Umweltbedingungen beobachtet man in den letzten Jahren vermehrt den Bewuchs mit Algen und Pilzen auf unterschiedlichsten Flächen, insbesondere auf Wärmedämmverbundsystemen.

Algen und Pilze sind als Mikroorganismen überall in unserer Umwelt vorhanden. Notwendige Voraussetzungen für Algenwachstum sind Feuchtigkeit, Mineralstoffe, Kohlendioxid und Licht. Pilze benötigen für ihr Wachstum zusätzlich organische Substanzen.

Wärmedämmverbundsysteme sind im Neubau und bei der Sanierung von Altbauten weit verbreitet. Diese Systeme reduzieren den Wärmestrom durch die gedämmten Flächen und ermöglichen energiesparende Bauweisen.

Die Außenoberfläche wärmegedämmter Fassaden kühlt aufgrund der reduzierten Wärmezufuhr aus dem Gebäudeinneren speziell in den Nachstunden durch Konvektion mit der kalten Außenluft stark ab. In klaren Nächten kommt es zusätzlich zu einer Wärmeabstrahlung an den Nachthimmel und dadurch zur Unterkühlung dieser Fassaden bis hin zu einer Unterschreitung des Taupunktes. Luftfeuchtigkeit schlägt sich dann in Form von Tau auf diesen Fassaden nieder und bildet neben der Beregnung mit die wichtigste Lebensgrundlage für Mikroorganismen.

Mit Algen befallene Fassaden können nach heutigem Stand der Technik nur mit einem aufwendigen Verfahren saniert werden.

Dabei wird zunächst die Fassade z.B. mit einem Hochdruckreiniger gereinigt. Die Reinigung ist vorsichtig durchzuführen, damit keine unnötig großen Wassermengen, die lange Rücktrocknungszeiten erfordern, in den Untergrund "gedrückt" werden. Nach einer zwei- bis dreitägigen Trocknung werden anschließend die gereinigten Flächen mit einer algizid und fungizid wirksamen sogenannten "Sanierlösung" eingestrichen, die unsichtbare winzige Zellen und Sporen abtötet und dadurch verhindert, dass sich Mikroorganismen an anderer Stelle wieder festsetzen und dort zu einer neuen Infektionsquelle werden. Da es sich dabei um wasserlösliche Produkte handelt, darf nicht nachgewaschen werden und die damit beschichteten Flächen müssen vor Regen geschützt werden. Ablaufende Mengen müssen sorgsam aufgefangen und als Sondermüll entsorgt werden. Als besonders nachteilig hat es sich erwiesen, dass die Fassade vor dem Auftragen der Sanierlösung weitgehend trocken sein muss, da noch in den Poren befindliche Feuchtigkeit das Eindringen der Sanierlösung blockiert und die notwendige Tiefenwirkung nicht erzielt werden kann.

Zusätzlich muss nach einer weiteren Trocknungsphase ein zweimaliger Anstrich mit z.B. Siliconharzfarben oder hydrophob ausgerüsteten Dispersionsfarben erfolgen, die ebenfalls algizid und fungizid ausgerüstet sein müssen, damit eine möglichst lange Schutzwirkung vor erneutem Befall gewährleistet werden kann.

Algen und Pilze zerstörende Produkte zur Behandlung befallener Fassaden enthalten nach heutigem Stand der Technik oxydierenden Substanzen, wie Peroxyde, Chlorbleichlauge oder quaternäre Ammoniumverbindungen. Im Zeitraum von ca. einer Woche wird durch diese Substanzen der Chlorophyll-Farbstoff der Alge zerstört und weiteres Pilzwachstum verhindert.

So werden z.B. für die Vorbehandlung quartäre Ammoniumsalze wie z.B. wässrige Lösungen von Benzylammoniumchloriden, kombiniert mit mikrobiozid hochwirksamen heterozyklischen Verbindungen gelöst in Propylenglykol, eingesetzt.

Verschiedenartige Algizide und Fungizide sind in der DE 691 13 762, DE 195 43 097 und der DE 40 27 387 angegeben.

Die europäische Patentschrift EP 0 819 665 beschreibt die Herstellung und Anwendung von wäßrigen Cremes von Organosiliciumverbindungen für die Hydrophobierung von Baustoffen. In dieser Schrift wird bereits erwähnt, dass Fungizide, Bakterizide, Algicide, Mikrobiocide, Geruchsstoffe, Korrosionsinhibitoren und Entschäumer enthalten sein können. Die bevorzugte Menge an Zusatzstoffen beträgt nach dieser Schrift jedoch höchstens 2, insbesondere 0,5 Gew.-% der Gesamtmenge der Cremes. Cremes nach der EP 0 819 665 sind unter dem Handelsnamen Wacker BS® Creme P erhältlich.

Die in der EP 0 819 665 genannte mögliche Höchstmenge an Zusatzstoffen kann dadurch erklärt werden, dass die Viskosität der Creme bei einem höheren Anteil an Zusatzstoffen nach dem Stand der Technik nicht aufrechterhalten werden kann.

Eine gemäß dem in der EP 0 819 665 beschriebenen Verfahren hergestellte Creme mit einem Anteil von 2 Gew.-% an Wirkstoffen gegen Algen und/oder Pilze ist nicht geeignet für die Behandlung von bereits mit Algen und/oder Pilzen befallenen Fassaden nach dem erfindungsgemäßen Verfahren, da die Wirkstoffkonzentration in der Creme zu gering ist.

Ausgehend von diesem Stand der Technik liegt der Erfindung die Aufgabe zugrunde, ein Verfahren zur Behandlung von mit Algen und/oder Pilzen befallenen Fassaden zu schaffen, mit dem eine gegenüber dem aufwendigen Verfahren nach dem Stand der Technik deutlich einfachere Verarbeitung und ein langfristiger Schutz aufgrund guter Tiefenwirkung und zuverlässiger Zerstörung der vorhandenen Algen und Pilze und ein zur Verwendung bei derartigen Verfahren einsetzbares Mittel anzugeben.

Das Verfahren zur Behandlung von mit Algen und/oder Pilzen befallenen Fassaden nach der Erfindung, bei dem diese Aufgabe gelöst ist, zeichnet sich im wesentlichen dadurch aus, dass die zur Behandlung geeigneten Wirkstoffe in dickschichtigen Systemen, insbesondere in wäßrigen Cremes enthalten sind und mit einem einmaliger Auftrag der Creme ausreichend Wirkstoff für Desinfektion und langfristigen Schutz der Fassade zur Verfügung gestellt werden kann. Nach dem erfindungsgemäßen Verfahren erübrigen sich weitere Anstriche für den Schutz vor Algen und Pilzbefall, womit gegenüber dem Verfahren nach dem Stand der Technik eine deutlich vereinfachte Verarbeitung und kostengünstige Behandlung gegeben ist. Weiterer wesentlicher Vorteil gegenüber dem Verfahren nach dem Stand der Technik ist, dass nach der vorhergehenden Reinigung nicht die Trocknung der Fassade abgewartet werden muss, sondern das Verfahren zuverlässig auch auf feuchten bzw. nassen Untergründen eingesetzt werden kann.

Als Creme werden pastöse, wasserhaltige Zubereitungen bezeichnet, die Emulsionssysteme aus Wirkstoff, Wasser und Emulgatoren sind. Cremes sind frei von sich absetzenden Festkörpern und daher besonders lagerstabil. Sie sind standfeste streichbare, roll- und rakelbare vorzugsweise farblose Beschichtungen.

Es hat sich gezeigt, daß die in der EP 0 819 665 beschriebenen Cremes bei Zugabe spezieller Mittel nicht ihre Viskosität verlieren und somit auch größere Mengen als 2 Gew.-% an diesen speziellen Zusatzstoffen beigemischt werden können. Für die spezielle Verwendung in dem erfindungsgemäßen Verfahren kann der Creme z.B. Dimethyl-benzyl-cocosfettalkyl-ammoniumchlorid (C₈ - C₁₈) in einer Menge von 2-10 Gew.-% beigefügt werden, ohne dass die Viskosität der Creme unter 1.5 Pa xs herabgesetzt wird. wird.

Dieser Wirkstoff ist unter dem Handelsnamen Quartammon Quat erhältlich.

Kombiniert man dies zusätzlich mit geringen Mengen von 0,5 - 2 Gew.-% an Microbioziden einer hochwirksamen, heterocyclischen Verbindungen, die 0,5 - 5,0 Gew.-% Methylbenzimidazol - 2 - ylcarbamat, 5,0 - 15,0 Gew.-% einer Mischung verschiedener Isathiazolinone und 0,5 - 5,0 Gew.-% eine Benzylsulfonsäure, beinhalten, wie z.B. Mergal S97 der Fa. Troy, so erhält man eine Creme auf Silan-/Siloxan Basis, die sich ohne Spritzneigung applizieren läßt und einen vorhandenen Algen-/Pilzbewuchs wirksam zerstört und durch die zugeführte Menge an Wirkstoffen langfristigen Schutz vor Neubefall bietet.

Nach dem Auftrag der Creme auf die Fassade erfolgt eine hydrolytische Freisetzung von Alkohol und eine damit einhergehende Bildung eines hydrophoben Siliconharzes. Diese zusätzliche Hydrophobierung der Oberfläche reduziert das kapillare Saugvermögen des Baustoffes ohne die Poren und Kapillaren zu verstopfen.

Die erfindungsgemäßen Mittel zur Verwendung bei einem erfindungsgemäßen Verfahren sind im wesentlichen dadurch gekennzeichnet, daß sie eine pastöse, hydrophobierende Creme aufweisen, in der zur Behandlung von mit Algen und/oder Pilzen befallenen Flächen geeignete Wirkstoffe in einer Menge von mehr als 2 Gew.-% und vorzugsweise weniger als 10 Gew.-% enthalten sind. Als Wirkstoff zur Behandlung von mit Algen und/oder Pilzen befallenen Flächen wird in einer besonders bevorzugten Ausführungsform der Erfindung Dimethyl-benzyl-cocosfettalkyl-ammoniumchlorid (C₈-C₁₈) eingesetzt.

Zur Sicherstellung zufriedenstellender Verarbeitungseigenschaften unter Vermeidung von Spritzern beim Auftragen auf die zu behandelnden Flächen weist die Creme des erfindungsgemäßen Mittels zweckmäßigerweise eine Viskosität von mehr als 0,5 Pa xs, vorzugsweise mehr als 1 Pa x s, besonders bevorzugt von 1.5 oder mehr Pa x s auf. Dabei wird eine streichbare, roll- und rakelbare Konsistenz erhalten, wenn die Viskosität der Creme 15 Pa x s oder weniger vorzugsweise 5.O Pa xs oder weniger beträgt.

Eine besonders gute Lagerstabilität erfindungsgemäßer Mittel wird erreicht, wenn der Anteil von Feststoffen mit einer Teilchengröße von 200 µm oder mehr in der Creme weniger als 1 Gew.-% beträgt. Im Hinblick auf den Erhalt einer zufriedenstellenden Lagerstabilität hat es sich ferner als günstig erwiesen, wenn die Creme eine Dichte von 0,8 g/cm³ oder mehr aufweist und die Dichte der darin noch enthaltenen Feststoffe weniger als 1,5 g/cm³ beträgt. Bei einer besonders bevorzugten Ausführungsform der Erfindung ist die Creme vollständig frei von sich absetzenden Festkörpern.

## Patentansprüche

1. Verfahren zur Behandlung von mit Algen und/oder Pilzen befallenen Flächen, bei dem nach einer vorhergehenden Reinigung z.B. mit einem Hochdruckreiniger in einem vorzugsweise einmaligen Auftrag eine pastöse, hydrophobierende Creme aufgetragen wird, die 2.5 bis 12 Gew. -% einer gegen Algen und/oder Pilzen hochwirksamen Kombination enthält.

2. Verfahren nach Anspruch 1, **dadurch gekennzeichnet, dass** die gegen Algen und/oder Pilzen hochwirksame Kombination 50 - 95 Gew.-% Dimethyl-benzyl-cocosfettalkyl-ammoniumchlorid (C₈ - C₁₈) und 5,0 - 50 Gew.-% einer hochwirksamen heterocyclischen Verbindung bestehend aus 0,5 - 5,0 Gew.-% Methylbenzimidazol - 2-ylcarbamat, 5,0 - 15,0 Gew.-% einer Mischung verschiedener Isathiazolinone und 0,5 - 5,0 Gew.-% eine Benzylsulfonsäure, enthält.

3. Verfahren nach Anspruch 1, **dadurch gekennzeichnet, dass** die Creme direkt nach der Reinigung auf den noch feuchten Untergrund aufgetragen wird.

4. Verfahren nach Anspruch 1 bis 3, **dadurch gekennzeichnet, dass** für die zuverlässige Behandlung von mit Algen und/oder Pilzen befallenen Flächen keine weiteren Farbanstriche notwendig sind.

5. Verfahren nach Anspruch 1, **dadurch gekennzeichnet, dass** es vorbeugend zur Verhinderung von Pilz-/Algenbewuchs an Fassaden angewendet wird.

6. Verfahren nach einem der vorhergehenden Ansprüche, **dadurch gekennzeichnete, daß** die pastöse hydrophobierende Creme eine Viskosität von 25 Pa x s oder weniger, vorzugsweise 5.0 Pa x s oder weniger aufweist.

7. Verfahren nach einem der vorhergehenden Ansprüche, **dadurch gekennzeichnet, daß** die pastöse hydrophobierende Creme eine Viskosität von mehr als 0,5 Pa x s; vorzugsweise mehr als 1 Pa x s, besonders bevorzugt von 1.5 Pa x s oder mehr aufweist.

8. Mittel zur Verwendung bei einem Verfahren nach einem der vorhergehenden Ansprüche, **gekennzeichnet durch** eine pastöse, hydrophobierende Creme, in der zur Behandlung von mit Algen und/oder Pilzen befallenen Flächen geeignete Wirkstoffe in einer Menge von mehr als 2,5 Gew.-% oder mehr und vorzugsweise 12 Gew.-% oder weniger enthalten sind.

9. Mittel nach Anspruch 8, **dadurch gekennzeichnet, daß** die Wirkstoffe 2-10 Gew.-% Dimethyl-benzyl-cocosfett-ammoniumchlorid (C₈-C₁₈) aufweisen.

10. Mittel nach Anspruch 8 oder 9, **dadurch gekennzeichnet, daß** es zusätzlich 0,5 - 2 Gew.-% Microbiozid einer hochwirksamen, heterocyclischen Verbindung enthält.

11. Mittel nach einem der Ansprüche 8 bis 10, **dadurch gekennzeichnet, daß** die Creme eine Viskosität von 15 Pa x s oder weniger als 10, vorzugsweise 5 Pa xs oder weniger aufweist.

12. Mittel nach einem der Ansprüche 8 bis 11, **dadurch gekennzeichnet, daß** die Creme eine Viskosität von mehr als 0,5 Pa xs, vorzugsweise mehr als 1 Pa xs, besonders bevorzugt von 1.5 oder mehr Pa xs aufweist.
